# EUROPEAN PATENT SPECIFICATION

(11) **EP 0 275 151 B1**
(45) Date of publication and mention of the grant of the patent: **19.05.1993**
(21) Application number: 88300113.3
(22) Date of filing: 08.01.1988
(51) Int. Cl.: C01G 33/00, C01G 35/00, C01G 51/00, C01G 53/00

(54) **Method for producing crystalline complex perovskite compounds**
Verfahren zur Herstellung von kristallinen komplexen Perovskit-Verbindungen
Procédé de production de composés perovskites cristallins complexes

(30) Priority: 08.01.1987 JP 2375/87; 05.03.1987 JP 50558/87; 29.09.1987 JP 245121/87
(43) Date of publication of application: 20.07.1988
(73) Proprietor: MATSUSHITA ELECTRIC INDUSTRIAL CO., LTD., Kadoma-shi, Osaka-fu, 571 (JP)
(72) Inventor: Inoue, Osamu, Kadoma-shi Osaka (JP); Kawashima, Syunichiro, Hirakata-shi Osaka (JP)
(74) Representative: Myerscough, Philip Boyd

(56) References cited:
- US-A- 3 366 510
- CHEMICAL ABSTRACTS, vol. 105, no. 26, December 1986, page 288, abstract no. 231385g, Columbus, Ohio, US; & JP-A-61 174 114 (JGC CORP.) 05-08-1986
- CHEMICAL ABSTRACTS, vol. 100, no. 10, March 1984, page 652, abstract no. 78479r, Columbus, Ohio, US; & JP-A-58 199 716 (MITSUBISHI MINING AND CEMENT CO., LTD) 21-11-1983
- CHEMICAL ABSTRACTS, vol. 108, no. 26, June 1988, page 600, abstract no. 230583v, Columbus, Ohio, US; & JP-A-62 202 854 (JGC CORP.) 07-09-1987
- CHEMICAL ABSTRACTS, vol. 106, no. 8, February 1987, page 293, abstract no. 54769h, Columbus, Ohio, US; & JP-A-61 136 921 (NIPPON MINING CO., LTD) 24-06-1986

## Description

This invention relates to a method for producing crystalline complex perovskite compounds which are useful as a material for capacitors or other ceramic materials.

For the manufacture of oxide ceramic powders, usual practice is to mix metal oxides and carbonates in a suitable milling device such as a ball mill and to calcine the mixture at suitable temperatures. The resultant powder is, however, disadvantageous in that it is large and irregular in size, with the result that sinterability is not good; because of the non-uniformity of the composition, the characteristics of the powder are not consistent; and, since the ingredients are mechanically mixed and milled, for example, by a ball mill, incorporation of impurities is inevitable.

In order to avoid the above disadvantages, various preparation processes using starting powders have been proposed. One such process is a process of hydrolyzing metal alkoxides. This process makes use of the reaction between a metal alkoxide of the formula, M(OR)n, in which M is a metal atom having a valence of n, and R represents an alkyl group, and water thereby forming a metal oxide or hydroxide and an alcohol. For instance, BaTiO₃ having a perovskite structure can be prepared by dissolving barium alkoxide and titanium alkoxide at a molar ratio of 1:1 in an organic solvent and dropping the solution into water for hydrolysis. This is described, for example, in JP-A-57-82119. The powder obtained by the above process has been already crystallized at a low powder formation temperature of 70 to 80°C. Further, the powder has a fine size and good sinterability, and is substantially free of any impurities as will occur at the time of mixing in a ball mill. In JP-A-58-199716 alkoxides of one or more of Ba, Sr, Ca and Pb, of rare-earth metals, actinides, Fe, Co, Mn, Ni, Rh, In, Ga, V, Cr, Al, Zn, Mg, Nb, Sb and Ta are mixed in an organic solvent, reacted, hydrolysed at 0-100°C and calcined at 500-1000°C to obtain a high purity amorphous and/or crystalline micropowder. The preparation of high purity Ba(Zn_{1/3} Nb_{2/3})O₃ is exemplified.

Oxides which contain two or more metals can be prepared as a crystalline powder by similar processes as described above include, for example, perovskite compounds or solid solutions thereof such as SrTiO₃, Ba(Ti₁₋ₓZrₓ)O₃, BaZrO₃, (Ba₁₋ₓSrₓ)TiO₃ as described in JP-A-58-2220; ferrite compounds such as MnFe₂O₄, (Mn₁₋ₓZnₓ)Fe₂O₄ and NiFe₂O₄ as described in JP-A-56-26726; germanic acid salts such as SrGeO₃, PbGeO₃ and ZnGeO₃ as described in JP-A-58-199717; and other oxides such as PbWO₄ and SrAs₂O₆.

However, the hydrolysis process of metal alkoxides have the serious problem that starting metal alkoxides are very expensive.

Other processes have also been proposed to obtain a fine powder by reaction of two or more metal salts or hydrolyzates in a strongly alkaline aqueous solution. These processes are useful in the preparation of crystalline powders of simple perovskite compounds or solid solutions thereof including, for example, BaTiO₃ (Journal of the Industrial Chemistry, Vol. 71, No. 1 and JP-A-59-39716), Ba(Ti₁₋ₓZrₓ)O₃ and (Ba₁₋ₓSrₓ)TiO₃ (JP-A-60-10303), and PbTiO₃ (JP-A-61-158821). JP-A-61-174114 describes a method for manufacturing functional ceramic materials. In the method, metal salts are premixed then immediately mixed with an alkaline solution, cleaned, dried then calcined to obtain the ceramic material. The method substantially reduces the impure precipitate formed during mixing with the alkali solution. The preparation of Pb(Mg_{1/3}Nb_{2/3})O₃ is exemplified.

For the preparation of complex perovskite compounds having a more complicated crystalline structure and represented, for example, by the following formula,

A(Bₓ,C_{y})O₃

in which A, B and C are, respectively, metal atoms having valences of p, q and r, and x + y = 1 provided that q ≠ r and xq + yr = 6-p, the above described known processes or techniques are not satisfactory. For instance, with the hydrolysis method of metal alkoxides, an amorphous powder is formed. According to the process using a metal salt or its hydrolyzate, only four compounds indicated above are now prepared, but crystalline complex perovskite compounds have not been produced by the latter process. Even though the individual compounds of the solid solutions are taken into account, only four types of compounds including BaTiO₃, BaZrO₃, SrTiO₃ and PbTiO₃ are prepared.

It is an object of the invention to provide a method for producing crystalline complex perovskite compounds in the form of a fine powder by a simple and inexpensive manner in which the perovskite compounds are obtained at low reaction temperatures.

Accordingly, the present invention provides a method of producing a crystalline complex perovskite compound of the formula, A(B_{1/3}C_{2/3})O₃, in which A represents at least one divalent metal selected from Ca, Sr and Ba, B represents at least one metal selected from Mg, Zn, Co and Ni, and C represents at least one pentavalent metal selected from Ta and Nb, the method comprising: providing at predetermined mixing ratios at least one oxide, hydroxide, hydrous oxide, water-soluble inorganic salt or organic compound of a metal A, at least one oxide, hydroxide, hydrous oxide, water-soluble inorganic salt or organic compound of a metal B, and at least one oxide, hydroxide, hydrous oxide, water-soluble inorganic salt or organic compound of a metal C provided that any such water-soluble inorganic salt or organic compound is capable of yielding an oxide, hydroxide or hydrous oxide of a said metal by hydrolysis; treating the resulting mixture with an alkaline aqueous solution to provide a reaction system having a pH of at least 10 and to produce an amorphous powder and at the same time or subsequently heating the amorphous powder while at least fully wetted with alkaline aqueous solution at a temperature of at least 95°C to form the crystalline complex perovskite compound.

The present invention is characterised by the treatment of the starting compounds in an alkaline aqueous solution at certain, relatively low temperatures.

Preferably, the hydroxides, oxides or hydrous oxides obtained by hydrolysis of water-soluble metal salts or organic metal compounds are used because these compounds are more reactive and are likely to be formed as finer powders. When starting compounds of the respective metals are provided and are subsequently reacted in an alkaline aqueous solution, a uniformly mixed amorphous material is initially formed. This amorphous material or mixture is then converted into a crystalline complex perovskite compound when heated at 95°C or over. Accordingly, it is possible to form the perovskite compound from the mixture not only by one step where the mixture is heated in an alkaline aqueous solution at a sufficient temperature, but also by two steps including a first step of treating or interacting the mixture in an alkaline aqueous solution to form an amorphous phase of the ingredients and a second step of heating the mixture at a temperature sufficient to cause the mixture to be converted into a crystalline complex perovskite compound. This heating step should be effected in coexistence of or in the alkaline aqueous solution. The term "coexistence" is intended to mean that the amorphous phase is at least wetted completely with the alkaline solution.

### DETAILED DESCRIPTION AND EMBODIMENTS OF THE INVENTION

According to the method of the invention, there is obtained a crystalline complex perovskite compound of the formula, A(B_{1/3}C_{2/3})O₃, in which A represents at least one divalent metal selected from Ca, Sr and Ba, B represents at least one divalent metal selected from Mg, Zn, Co and Ni, and C represent at least one pentavalent metal selected from Nb and Ta.

The three types of metals represented by A, B and C should be essentially contained in final perovskite compounds of the invention. The respective metal components A, B and C may each consist of one or more metals selected from the defined group.

In the first step of the method of the invention, starting oxides, hydroxides, hydrous oxides, and water-soluble inorganic salts and organic compounds of the respective metals are provided. If oxides, hydroxides and hydrous oxides are used, these materials should be as fine as possible as provided. The oxides, hydroxides or hydrous oxides obtained from the water-soluble inorganic salts or organic compounds are preferred because they are fine in size and reactive although it is not always necessary to use those starting compounds obtained by hydrolysis of water-soluble metal salts or organic metal compounds. However, if the starting materials are not soluble in water and have a size over 1 micrometer, they are unlikely to readily form a uniformly mixed amorphous phase of the starting compounds. When such a mixture is subjected to reaction or treatment in an alkaline aqueous solution, the conversion reaction does not smoothly proceed to a satisfactory extent. As a result, it takes inconveniently a long time for the conversion reaction while leaving part of the starting materials unreacted. Even though the size is below 1 micrometer, the powders which have once been subjected to thermal treatment at high temperatures are poor in reactivity. This is why oxides, hydroxides or hydrous oxides obtained from metal salts or organic metal compounds by hydrolysis are preferably used. In fact, the oxides, hydroxides or hydrous oxides obtained from these soluble metal salts or organic metal compounds are more reactive and finer in size than available solid oxides, hydroxides or hydrous oxides of the defined metals. These water-soluble metal salts or organic metal compounds may be used as they are or after conversion into corresponding oxides, hydroxides or hydrous oxide. If the salts or organic metal compounds are added to the reaction system, they are readily converted into corresponding oxides, hydroxides or hydrous oxides in the system since the system is aqueous and alkaline in nature.

The salts useful for these purposes may be water-soluble inorganic salts such as sulfate, halides including chloride, bromide, iodide and fluoride, phosphate and nitrate. If it is desirable to separately obtain oxides, hydroxides or hydrous oxides from these salts, a metal salt is dissolved in water or an acidic solution and neutralized with an alkali as will be particularly described in the examples.

The organic metal compounds include, for example, alkoxides such as methoxide, ethoxide, propoxide, carboxylates such as acetate, propionate and acetylacetonates. In order to separately obtain oxides, hydroxides or hydrous oxides from these organic metal compounds, these compounds are dissolved in a suitable solvent and the resultant solution is added to water. Alternatively, the compound may be dissolved in water and neutralized with an alkali.

Irrespective of the origins of the starting oxide, hydroxide or hydrous oxide powders, they should preferably have a size not larger than 1 micrometer.

These starting materials should be provided at predetermined mixing ratios so that a final perovskite compound has intended ratios of the metals, A, B and C.

In the second step, the starting materials are subjected to a conversion reaction into a crystalline complex perovskite compound. This conversion reaction is effected in an alkaline solution at a temperature of at least 95°C causing the starting materials to form the perovskite compound. In order to make an alkaline solution, an alkaline aqueous solution, preferably a solution of a hydroxide of an alkali metal hydroxide such as NaOH or KOH may be used. In this connection, however, since the complex perovskite compound contains an alkaline earth metal such as Ba, it is preferred to use a hydroxide or oxide of this alkaline earth metal to be contained in a final perovskite compound. In a preferred embodiment, the alkaline aqueous solution is a solution of a hydroxide of metal A. This makes it possible to prevent impurities such as Na and K from incorporation into the perovskite compound.

The conversion reaction proceeds satisfactorily in the alkaline aqueous solution. If the alkaline aqueous solution is used in too small an amount, the reaction does not necessarily proceed smoothly. On the contrary, too large an amount of the aqueous solution undesirably requires a large amount of an alkaline substance. It is thus preferred from the industrial viewpoint that the starting materials are used in an amount of 0.1 to several moles per liter of the solution when calculated as a final complex perovskite compound.

In view of the reaction time and yield, the reaction system should has a pH of 10 or over. At a pH below 10, the reaction proceeds only slowly. More preferably, the pH of the reaction system is 11 or over, most preferably 12 or over. Accordingly, the alkaline aqueous solution preferably has a pH not lower than 12. The starting materials used contain an alkaline earth element such as Ba, Mg and the like. If these materials are soluble in water, the reaction system eventually becomes alkaline and the reaction may proceed without use of any additional alkaline substances. However, this will result in formation of a final perovskite compound having a composition different from an intended composition owing to the dissolution of part of the starting powders. To avoid this, other alkaline substances such as NaOH may be added to the reaction system but, as described before, the contamination of the final product with Na would become inevitable. Accordingly, it is preferred to use an aqueous saturated solution of a starting alkaline compound as an alkaline aqueous solution, or to permit part of a starting alkaline compound to be dissolved in water and continue the reaction until the water is gradually evaporated to dryness.

The conversion reaction is considered to proceed by two steps: one step includes interaction of three kinds of starting materials in an alkaline aqueous solution to form a uniformly mixed amorphous powder mixture ; and the other step, which may be carried out at the same time or subsequent to the first step includes crystallization of the amorphous powder by heating at temperatures not lower than 95°C in the solution to form a crystalline complex perovskite compound.

The first step proceeds more quickly at higher temperatures, but the temperature is not critical. The temperature higher than 70°C is preferable in order to cause the interaction efficiently. The time before completion of the interaction may vary depending upon not only the interaction temperature, but also the types and amounts of starting materials. The interaction time may be in a wide range of 0.5 hours or 100 hours, preferably several to several tens of hours. The uniformly mixed amorphous phase obtained by the interaction is considered to be a kind of precursor in which metal-O-metal bonds may be formed along with metal-OH bonds.

In the crystallization step, the temperature is important. When the interaction has been completed and the resultant amorphous powder is heated under contact with the alkaline solution at a certain temperature, the crystallization proceeds. A crystalline complex perovskite compound starts to be formed at temperatures of 95°C or higher as will be clearly seen from the examples. The heating temperature is preferably not lower than 100°C, more preferably not lower than 105°C for ensuring a smooth crystallization procedure. At temperatures higher than 100°C, the crystallization is generally effected in a closed system, such as an autoclave, under pressure because the reaction system is aqueous. According to a preferred embodiment, the temperature is higher than 110°C and the reaction is effected in a closed system under pressure.

In the one step reaction procedure as described before, the reaction system is heated to 95°C or higher from commencement of the treatment in coexistence of or in an alkaline aqueous solution so that the starting materials are converted through an amorphous powder into crystallized perovskite by one step. This one step procedure is preferably effected in an autoclave or the like closed system so that temperatures of 95°C or higher are conveniently used.

In another embodiment of the invention, the method comprises treating the mixture in an alkaline aqueous solution at a temperature lower than 95°C to form a uniformly mixed amorphous powder, and subsequently heating the amorphous powder to convert the powder into the crystalline complex perovskite compound. The interaction is effected at temperatures lower than 95°C for a sufficient time of, for example 0.5, hours or longer in an aqueous alkaline solution to obtain a uniformly mixed amorphous powder. Preferably, the temperature is 70°C or higher. Subsequently, this powder is heated at 95°C or higher in coexistence of or in the alkaline solution. Preferably the amorphous powder is heated at a temperature higher than 110°C. This embodiment is different from the first embodiment in that the amorphous powder is initially formed by treatment in the alkaline aqueous solution at temperatures lower than 95°C, at which crystallization starts to occur, and is then crystallized at temperatures higher than 95°C as set forth with respect to the first embodiment. For the crystallization, the thus obtained amorphous powder may be removed from the solution but kept fully wetted thereby and then heated. Alternatively, the amorphous powder may be heated in the aqueous alkaline solution at temperatures not lower than 95°C for a time sufficient for crystallization, or may be heated until the mixture is evaporated to dryness suitably if at least one of the starting materials is soluble in water and is used to make an alkaline solution. This embodiment using the distinct two interaction and crystallization steps is advantageous in that crystals of a final perovskite compound are finer and more uniform in size.

The conversion reaction is preferably effected in an atmosphere of a gas free of CO₂ so that formation of a crystalline complex perovskite compound is not impeded at all. This is because if Ba is contained, for example, in the starting materials, it may react with CO₂ and convert into barium carbonate, which is insoluble in water. Accordingly, it is preferred to effect the reaction in an atmosphere of a CO₂-free gas such as N₂ or O₂, or other inert gases such as Ar.

The conversion reaction takes a relatively long time, so that the reaction should preferably be effected in a closed or substantially closed system, not permitting the water in the reaction system to be evaporated by heating. For this purpose, a system using a reflux condenser as well as an autoclave may be conveniently used to recycle once evaporated water. Preferably, the reaction is effected in a system using a reflux condenser so that the water from the alkaline aqueous solution can be recycled. In this connection, it should be noted that if starting alkaline materials are used to make an alkaline reaction system without use of any additional alkaline substances, the water in the system may be purposely evaporated off by heating so as to bring a final composition of the perovskite to conform to an initially intended composition. When at least one member of the mixture in the alkaline aqueous solution is soluble in water and is used to make the alkaline aqueous solution the mixture may preferably be heated to dryness. The treatment or reaction may be carried out under agitation or merely under reflux.

The final perovskite compound is preferably formed in and separated from the alkaline aqueous solution by any known techniques such as filtration, centrifugal separation and the like.

Typical and preferable examples of final crystalline complex perovskite compounds prepared according to the method of the invention include Ba(Zn_{1/3}Ta_{2/3})O₃, Ba(Mg_{1/3}Ta_{2/3})O₃ and Sr(Mg_{1/3}Nb_{2/3})O₃, more preferably Sr(Mg_{1/3}Nb_{2/3})O₃ and Ba(Mg_{1/3}Ta_{2/3})O₃.

The present invention is more particularly described by way of examples.

### Example 1

Prior to preparation of a complex perovskite compound, starting compounds were first prepared. Special grade ZnSO₄ was dissolved in pure water, to which NaOH was added in order to make a pH of approximately 6.5. The resultant precipitate was separated from the solution and washed sufficiently with pure water to obtain zinc hydroxide. Separately, TaCl₅ was dissolved in a mixture of nitric acid and hydrofluoric acid and neutralized in the same manner as with Zn to obtain an amorphous hydrolyzate of tantalum. The thus obtained powders were each heated up to 1000°C to determine an ignition loss, from which the contents of Zn and Ta were, respectively, determined. These powders and special grade Ba(OH)₂.8H₂O were accurately weighed in such amounts that Ba:Zn:Ta = 3:1:2 by atomic ratio. The powders were mixed with an aqueous saturated solution of barium hydroxide in a flask. The flask was set on a water bath and heated under reflux in a stream of N₂ gas at 80°C for 5 hours. The resultant precipitate was separated by a centrifugal separator, and divided into pieces. The respective pieces were wrapped with paper in a wet condition and dried at different temperatures of 30°C, 90°C, 95°C, 100°C and 110°C to obtain the respective powder products. These products were each subjected to X-ray diffraction. As a result, it was found that the sample dried at 30°C consisted of an amorphous phase and barium hydroxide. The sample dried at 90°C was entirely amorphous. Those samples dried at 95°C and 100°C showed peaks of a crystalline complex perovskite phase of Ba(Zn_{1/3}Ta_{2/3})O₃ although these peaks were broad. The sample dried at 110°C was found to be crystalline Ba(Zn_{1/3}Ta_{2/3})O₃.

### Example 2

In the same manner as in Example 1, Ba(OH)₂.8H₂O, an amorphous hydrolyzate product of tantalum and ZnO obtained by precipitation from an aqueous solution of ZnSO₄ at a pH of 10 were provided in such amounts that Ba:Zn:Ta = 3:1:2 by atomic ratio. These powders were added to 50 ml of pure water and heated under reflux in an stream of N₂ at 90°C for 5 hours. Thereafter, a reflux condenser was removed and the temperature was raised to 100°C, at which the content was heated under agitation until it was evaporated to dryness. The resultant powder was subjected to measurement of X-ray diffraction, revealing a very broad diffraction peak of a crystalline complex perovskite phase of Ba(Zn_{1/3}Ta_{2/3})O₃.

### Example 3

Ta(C₂H₅O)₅ was dissolved in ethanol, to which pure water was added thereby obtaining an amorphous hydrolyzate product of tantalum. This tantalum product, BaSO₄ and ZnSO₄ were provided in such amounts that that Ba:Zn:Ta = 3:1:2 by atomic ratio, followed by addition to 100 ml of pure water. Thereafter, an aqueous NaOH solution was added to the mixture in an amount of 0.032 moles as NaOH, followed by heating under reflux in a stream of N₂ at the boiling point for 5 hours.

The resultant powder was dried and subjected to X-ray diffraction, from which it was confirmed that a crystalline complex perovskite compound, Ba(Zn_{1/3}Ta_{2/3})O₃, was formed although the peak was very broad.

### Example 4

Similar to Example 2, Ba(OH)₂.8H₂O, an amorphous tantalum hydrolyzate and ZnO obtained by precipitation from an aqueous solution of ZnSO₄ at a pH of 10 were, respectively, provided in such amounts that that Ba:Zn:Ta = 3:1:2 by atomic ratio. These powders were added to 50 ml of an aqueous saturated solution of barium hydroxide. The dispersion was placed in a 200 ml autoclave and subjected to reaction at 120°C for 5 hours. Thereafter, the content was cooled down to room temperature and the resultant powder was separated by filtration and dried. This powder was subjected to X-ray diffraction analysis, from which it was confirmed that a crystalline complex perovskite compound wa formed. The formed crystals had a size of about 0.1 micrometer.

### Example 5

Similar to Example 1, Ba(OH)₂.8H₂O, an amorphous hyrolyzate of tantalum oxide and MgO were, respectively, provided in such amounts that Ba:Mg:Ta = 3:1:2 by atomic ratio. These powders were added to 150 ml of an aqueous saturated solution of barium hydroxide and magnesium hydroxide and placed in a flask. The above procedure was repeated, thereby giving three flasks in total. These flasks were, respectively, set on a water bath and heated under reflux in a stream of N₂ at 80°C, 90°C and 95°C for 5 hours. The resultant precipitate was separated by means of a centrifugal separator, transferred to a beaker and dried in a dryer at 80°C. The powders obtained under different conditions were subjected to X-ray diffraction analysis. As a result, it was found that the powders treated at 80°C and 90°C were amorphous. On the other hand, the powder treated or reacted at 95°C showed a diffraction peak of a crystalline complex perovskite phase of Ba(Mg_{1/3}Ta_{2/3})O₃ although the peak was very broad.

### Example 6

Similar to Example 6, Ba(OH)₂.8H₂O, MgO and an amorphous hdrolyzate of tantalum were, respectively, provided in such amounts that Ba:Mg:Ta = 3:1:2 by atomic ratio. These powders were added to 50 ml of pure water and placed in a 200 ml autoclave, followed by treatment at 110°C for 5 hours. Thereafter, the content in the autoclave was transferred to a teflon beaker and dried at 100°C. The resultant powder was subjected to X-ray diffraction analysis, revealing that a crystalline complex perovskite phase of Ba(Mg_{1/3}Ta_{2/3})O₃ was formed. The size of the powder determined from the X-ray diffraction analysis was about 0.1 micrometer.

### Example 7

Ta(C₂H₅O)₅ was dissolved in ethanol, to which pure water was added thereby obtaining an hydrolyzate product of tantalum. This tantalum product, BaSO₄ and MgSO₄ were, respectively, provided in such amounts that Ba:Mg:Ta = 3:1:2 by atomic ratio. These powders were added to 100 ml of pure water, to which an aqueous NaOH solution was added in such an amount that the content of NaOH was 0.032 moles. The mixture was reacted by heating in a stream of N₂ under reflux at the boiling point of about 100°C for 5 hours. Subsequently, the content was cooled down to room temperature and the resultant powder was filtered off and dried. The dried powder was subjected to X-ray diffraction analysis, from which formation of a crystalline complex perovskite compound was confirmed. The crystals of the powder had a size of about 0.2 micrometers.

### Example 9

A precipitate obtained by neutralizing an acidic aqueous solution of NbCl₅ was washed sufficiently with pure water and dried to obtain an amorphous hydrolyzate product of niobium. This niobium product, special grade strontium hydroxide and magnetic oxide were, respectively, provided in such amounts that Sr:Mg:Nb = 3:1:2 by atomic ratio. These materials were added to 150 ml of an aqueous saturated solution of strontium hydroxide and magnesium hydroxide and placed in an autoclave. The above procedure was repeated to obtain six samples in total. These samples were reacted for 2 hours at different temperatures of 80°C, 90°C, 95°C, 100°C, 110°C and 140°C. The resultant reaction products were each separated by filtration, washed with water and dried at 80°C. Each product was subjected to X-ray diffraction analysis. As a result, it was found that the products obtained by the reaction at 80°C and 90°C were amorphous. The products obtained by the reaction at 95°C and 100°C were observed to have broad diffraction peaks of crystalline Sr(Mg_{1/3}Nb_{2/3})O₃. The products obtained by the reaction at 110°C and 140°C were crystalline Sr(Mg_{1/3}Nb_{2/3})O₃.

### Example 10

Similar to Example 9, an amorphous hydrolyzate product of niobium, special grade strontium hydroxide, and magnesium oxide were, respectively, provided in such amounts that that Sr:Mg:Nb = 3:1:2 by atomic ratio. These materials were added to 50 ml of pure water and reacted by heating under reflux in a stream of Ar at 90°C for 3 hours.

Thereafter, a reflux condenser was removed and the temperature of the reaction system was raised to about 100°C, followed by heating until the water was completely evaporated. The resultant powder was subjected to X-ray diffraction analysis, with the results that a broad diffraction peak of Sr(Mg_{1/3}Nb_{2/3})O₃ was observed.

### Example 11

Niobium ethoxide, special grade strontium sulfate and magnetic hydroxide were, respectively, provided in such amounts that Sr:Mg:Nb = 3:1:2 by atomic ratio. These materials were added to 200 ml of an aqueous NaOH solution having a concentration of 1 mole and reacted in an autoclave in a stream of Ar at 110°C for 5 hours. The resultant powder was subjected to X-ray diffraction analysis, from which a diffraction peak of crystalline Sr(Mg_{1/3}Nb_{2/3})O₃ was observed. The crystals of the powder had a size of about 0.1 micrometer.

## Claims

1. A method of producing a crystalline complex perovskite compound of the formula, A(B_{1/3}C_{2/3})O₃, in which A represents at least one divalent metal selected from Ca, Sr and Ba, B represents at least one metal selected from Mg, Zn, Co and Ni, and C represents at least one pentavalent metal selected from Ta and Nb, the method comprising:
providing at predetermined mixing ratios at least one oxide, hydroxide, hydrous oxide, water-soluble inorganic salt or organic compound of a metal A, at least one oxide, hydroxide, hydrous oxide, water-soluble inorganic salt or organic compound of a metal B, and at least one oxide, hydroxide, hydrous oxide, water-soluble inorganic salt or organic compound of a metal C provided that any such water-soluble inorganic salt or organic compound is capable of yielding an oxide, hydroxide or hydrous oxide of a said metal by hydrolysis; treating the resulting mixture with an alkaline aqueous solution to provide a reaction system having a pH of at least 10 and to produce an amorphous powder and at the same time or subsequently heating the amorphous powder while at least fully wetted with alkaline aqueous solution at a temperature of at least 95°C to form the crystalline complex perovskite compound.

2. A method according to claim 1, wherein said crystalline complex perovskite compound is Sr(Mg_{1/3}Nb_{2/3})O₃, Ba(Mg_{1/3}Ta_{2/3})O₃.

3. A method according to claim 1 or 2, wherein said alkaline aqueous solution is a solution of a hydroxide of metal A.

4. A method according to claim 3, wherein the solution is a saturated solution.

5. A method according to claim 1 or 2, wherein said alkaline aqueous solution is a solution of an alkali metal hydroxide.

6. A method according to any one of the preceding claims, wherein said alkaline aqueous solution has a pH not lower than 12.

7. A method according to any one of the preceding claims, wherein the temperature is higher than 110°C and the reaction is effected in a closed system under pressure.

8. A method according to any one of claims 1 to 6, wherein the reaction is effected in a system using a reflux condenser so that the water from the alkaline aqueous solution can be recycled.

9. A method according to any one of the preceding claims, wherein the mixture in the alkaline aqueous solution is heated to dryness, at least one member of the mixture being soluble in water and being used to make the alkaline aqueous solution.

10. A method according to any one of claims 1 to 8 wherein perovskite compound is formed in and separated from the alkaline aqueous solution.

11. A method according to any one of the preceding claims, wherein the reaction is effected in a CO ₂ gas-free atmosphere.

12. A method according to any one of claims 1 to 8, which comprises treating the mixture in an alkaline aqueous solution at a temperature lower than 95°C to form a uniformly mixed amorphous powder, and subsequently heating the amorphous powder to convert the powder into the crystalline complex perovskite compound.

13. A method according to claim 12, wherein the amorphous powder is heated at a temperature higher than 110°C.

14. A method according to claim 12 or 13 wherein the amorphous powder is removed from the solution but kept wetted thereby and is then heated.

15. A method according to claim 12 or 13, wherein the amorphous powder is heated in the alkaline aqueous solution.

16. A method according to any one of claims 12 to 15, wherein the amorphous powder is heated to dryness.

## Patentansprüche

1. Verfahren zur Herstellung einer kristallinen, komplexen Perowskit-Verbindung der Formel A(B_{1/3}C_{2/3})O₃, in der A mindestens ein zweiwertiges Metall bedeutet, das aus Ca, Sr und Ba ausgewählt ist, B mindestens ein Metall bedeutet, das aus Mg, Zn, Co und Ni ausgewählt ist, und C mindestens ein fünfwertiges Metall bedeutet, das aus Ta und Nb ausgewählt ist, wobei in dem Verfahren mindestens ein Oxid, Hydroxid, Oxidhydrat oder wasserlösliches anorganisches Salz oder eine organische Verbindung eines Metalls A, mindestens ein Oxid, Hydroxid, Oxidhydrat oder wasserlösliches anorganisches Salz oder eine organische Verbindung eines Metalls B und mindestens ein Oxid, Hydroxid, Oxidhydrat oder wasserlösliches anorganisches Salz oder eine organische Verbindung eines Metalls C in vorgegebenen Mischungsverhältnissen bereitgestellt werden, wobei vorausgesetzt ist, daß jedes solche wasserlösliche anorganische Salz oder jede solche organische Verbindung fähig ist, durch Hydrolyse ein Oxid, Hydroxid oder Oxidhydrat eines erwähnten Metalls zu liefern; die resultierende Mischung mit einer alkalischen wäßrigen Lösung behandelt wird, um ein Reaktionssystem zu erhalten, das einen pH von mindestens 10 hat, und ein amorphes Pulver herzustellen und das amorphe Pulver, während es mindestens völlig mit alkalischer wäßriger Lösung befeuchtet ist, gleichzeitig oder anschließend bei einer Temperatur von mindestens 95 °C erhitzt wird, um die kristalline, komplexe Perowskit-Verbindung zu bilden.

2. Verfahren nach Anspruch 1, bei dem die erwähnte kristalline, komplexe Perowskit-Verbindung Sr(Mg_{1/3}Nb_{2/3})O₃, Ba(Mg_{1/3}Ta_{2/3})O₃ ist.

3. Verfahren nach Anspruch 1 oder 2, bei dem die erwähnte alkalische wäßrige Lösung eine Lösung eines Hydroxids des Metalls A ist.

4. Verfahren nach Anspruch 3, bei dem die Lösung eine gesättigte Lösung ist.

5. Verfahren nach Anspruch 1 oder 2, bei dem die erwähnte alkalische wäßrige Lösung eine Lösung eines Alkalimetallhydroxids ist.

6. Verfahren nach einem der vorhergehenden Ansprüche, bei dem die erwähnte alkalische wäßrige Lösung einen pH hat, der nicht niedriger als 12 ist.

7. Verfahren nach einem der vorhergehenden Ansprüche, bei dem die Temperatur höher als 110 °C ist und die Reaktion in einem geschlossenen System unter Druck durchgeführt wird.

8. Verfahren nach einem der Ansprüche 1 bis 6, bei dem die Reaktion in einem System unter Anwendung eines Rückflußkühlers durchgeführt wird, so daß das Wasser aus der alkalischen wäßrigen Lösung in den Kreislauf zurückgeführt werden kann.

9. Verfahren nach einem der vorhergehenden Ansprüche, bei dem die Mischung in der alkalischen wäßrigen Lösung zur Trockne erhitzt wird, wobei mindestens ein Bestandteil der Mischung wasserlöslich ist und zur Herstellung der alkalischen wäßrigen Lösung verwendet wird.

10. Verfahren nach einem der Ansprüche 1 bis 8, bei dem die Perowskit-Verbindung in der alkalischen wäßrigen Lösung gebildet und davon abgetrennt wird.

11. Verfahren nach einem der vorhergehenden Ansprüche, bei dem die Reaktion in einer CO₂-Gas-freien Atmosphäre durchgeführt wird.

12. Verfahren nach einem der Ansprüche 1 bis 8, bei dem die Mischung in einer alkalischen wäßrigen Lösung bei einer Temperatur, die niedriger als 95 °C ist, behandelt wird, um ein gleichmäßig gemischtes amorphes Pulver zu bilden, und das amorphe Pulver anschließend erhitzt wird, um das Pulver in die kristalline, komplexe Perowskit-Verbindung umzuwandeln.

13. Verfahren nach Anspruch 12, bei dem das amorphe Pulver bei einer Temperatur erhitzt wird, die höher als 110 °C ist.

14. Verfahren nach Anspruch 12 oder 13, bei dem das amorphe Pulver aus der Lösung entfernt, jedoch damit befeuchtet gehalten und dann erhitzt wird.

15. Verfahren nach Anspruch 12 oder 13, bei dem das amorphe Pulver in der alkalischen wäßrigen Lösung erhitzt wird.

16. Verfahren nach einem der Ansprüche 12 bis 15, bei dem das amorphe Pulver zur Trockne erhitzt wird.

## Revendications

1. Procédé de production d'un composé perovskite complexe cristallin, de formule A(B_{1/3}C_{2/3})O₃_{,} dans laquelle A représente au moins un métal divalent choisi parmi Ca, Sr et Ba, B représente au moins un métal choisi parmi Mg, Zn, Co et Ni, et C représente au moins un métal pentavalent choisi parmi Ta et Nb, ledit procédé comprenant les étapes consistant à :
- fournir, suivant des rapports de mélange prédéterminés, au moins un oxyde, hydroxyde, oxyde hydraté, sel minéral soluble dans l'eau ou dérivé organique soluble dans l'eau d'un métal A, au moins un oxyde, hydroxyde, oxyde hydraté, sel minéral soluble dans l'eau ou dérivé organique soluble dans l'eau d'un métal B, et au moins un oxyde, hydroxyde, oxyde hydraté, sel minéral soluble dans l'eau ou dérivé organique soluble dans l'eau d'un métal C, étant entendu que tout tel sel minéral ou dérivé organique soluble dans l'eau est capable de fournir un oxyde, hydroxyde ou oxyde hydraté dudit métal par hydrolyse,
- traiter le mélange résultant avec une solution aqueuse alcaline, pour obtenir un système réactionnel ayant un pH d'au moins 10 et produire une poudre amorphe, et chauffer, simultanément ou ensuite, la poudre amorphe, pendant qu'elle est au moins complètement imprégnée de la solution aqueuse alcaline, à une température d'au moins 95°C, pour former le composé perovskite complexe cristallin.

2. Procédé selon la revendication 1, dans lequel ledit composé perovskite complexe cristallin est Sr(Mg_{1/3}Nb_{2/3})O₃, Ba(Mg_{1/3}Ta_{2/3})O₃.

3. Procédé selon la revendication 1 ou 2, dans lequel ladite solution aqueuse alcaline est une solution d'un hydroxyde de métal A.

4. Procédé selon la revendication 3, dans lequel ladite solution est une solution saturée.

5. Procédé selon la revendication 1 ou 2, dans lequel ladite solution aqueuse alcaline est une solution d'un hydroxyde de métal alcalin.

6. Procédé selon l'une quelconque des revendications précédentes, dans lequel ladite solution aqueuse alcaline a un pH non inférieur à 12.

7. Procédé selon l'une quelconque des revendications précédentes, dans lequel la température est supérieure à 110°C et la réaction est effectuée dans un système clos, sous pression.

8. Procédé selon l'une quelconque des revendications 1 à 6, dans lequel on effectue la réaction dans un système utilisant un réfrigérant à reflux, de sorte que l'eau provenant de la solution aqueuse alcaline peut être recyclée.

9. Procédé selon l'une quelconque des revendications précédentes, dans lequel le mélange dans la solution aqueuse alcaline est chauffé jusqu'à siccité, au moins un constituant du mélange étant soluble dans l'eau et étant utilisé pour produire la solution aqueuse alcaline.

10. Procédé selon l'une quelconque des revendications 1 à 8, dans lequel le composé perovskite est formé dans la solution aqueuse alcaline et séparé de cette dernière.

11. Procédé selon l'une quelconque des revendications précédentes, dans lequel on effectue la réaction dans une atmosphère exempte de CO₂ gazeux.

12. Procédé selon l'une quelconque des revendications 1 à 8, qui comprend le traitement du mélange dans une solution aqueuse alcaline, à une température inférieure à 95°C, pour former une poudre amorphe bien homogénéisée, et le chauffage ultérieur de la poudre amorphe pour transformer la poudre en le composé perovskite complexe cristallin.

13. Procédé selon la revendication 12, dans lequel la poudre amorphe est chauffée à une température supérieure à 110°C.

14. Procédé selon la revendication 12 ou 13, dans lequel la poudre amorphe est ôtée de la solution, mais maintenue imprégnée de cette dernière, puis est chauffée.

15. Procédé selon la revendication 12 ou 13, dans lequel la poudre amorphe est chauffée dans la solution aqueuse alcaline.

16. Procédé selon l'une quelconque des revendications 12 à 15, dans lequel la poudre amorphe est chauffée jusqu'à siccité.
